# EUROPEAN PATENT SPECIFICATION

(11) **EP 3 168 086 B1**
(45) Date of publication and mention of the grant of the patent: **06.11.2019**
(21) Application number: 16197711.1
(22) Date of filing: 08.11.2016
(51) Int. Cl.: B60R 13/10

(54) **REINFORCED LICENSE PLATE**
VERSTÄRKTES NUMMERNSCHILD
PLAQUE D'IMMATRICULATION RENFORCÉE

(30) Priority: 16.11.2015 ES 201531657
(43) Date of publication of application: 17.05.2017
(73) Proprietor: INDUSTRIAS SAMAR'T, S.A., 17600 Figueres (Gerona) (ES)
(72) Inventor: SANCHEZ CASADEVALL, Enrique, 17600 FIGUERES (GERONA) (ES)
(74) Representative: Munoz Garcia, Antonio

(56) References cited:
- EP-A2- 2 018 997
- WO-A1-97/38336
- WO-A2-2006/136847
- GB-A- 2 524 542

## Description

### OBJECT OF THE INVENTION

As expressed in the title of the present specification, the invention relates to a reinforced license plate which provides its intended function with advantages and features that will be described in detail below and entail an improvement in the current state of the art.

More specifically, the object of the invention lies in a license plate specifically designed for the purpose of providing a high standard plate combining the look of methacrylate plates with a metallic reinforcement base which, provided with a peripheral rim, establishes a stronger and more luxurious solution than any of the plates existing up until now on the market, comprising to that end at least one base the rear face of which is made of any metallic material, an intermediate sheet of printed reflective material or another material suitable for incorporating characters and logotypes that are digitally printed thereon, said intermediate sheet having on its rear face a layer of glue, and a transparent plate in the upper plastic case which, also provided with a layer of glue in its rear part, is incorporated on the intermediate sheet by means of a laminating process.

### FIELD OF APPLICATION OF THE INVENTION

The field of application of the present invention is encompassed within the sector of the industry dedicated to the manufacture of vehicle accessories, specifically identification elements, focusing particularly on license plates and the like.

### BACKGROUND OF THE INVENTION

As is known, there are basically two types of license plates on the market, the so-called conventional license plates which are made of sheet metal, with the number printed thereon generally by means of a stamping process, and the so-called plastic or methacrylate license plates, generally made from a transparent acrylic plate with its rear face being printed on by means of laminating several layers.

The advantages that plastic or methacrylate plates have with respect to conventional license plates are mainly esthetic, since methacrylate plates are much more appealing, easier to clean and, particularly, they do not become dented or bend like conventional sheet metal plates.

However, methacrylate plates can also become damaged, normally due to blows or excessive pressure when screwing the plate on, which causes cracks in the plastic material. In any case, the main drawback of these plates is their high price, since in order to achieve sufficient strength the methacrylate part must have a certain thickness if undesired "warping" effects which may be produced due to heat or other atmospheric agents are to be avoided.

Therefore, the objective of the present invention is to provide the market with a new type of license plate combining the advantages of both materials, i.e., metal for providing strength and methacrylate for improving its outward appearance, allowing cost savings with minimum thicknesses of each material, since the combination of both provides, among other particularities of the new plate, sufficient strength for that purpose, therefore improving the conventional plates and methacrylate plates known up until now.

In addition and in reference to the current state of the art, it must be pointed out that the applicant, at least on its part, is unaware of the existence of any other license plate having technical, structural and constitutive features similar to those which the plate object of the present invention as claimed specifically has.

In said sense, it should be indicated that patent document WO2006/136847A2 discloses supports, particularly supports for identification plates suitable for use on vehicles, and signs, for example, identification devices, such as decoupling plates suitable for use on vehicles, on which plates of any type, including plates with layers of methacrylate, are incorporated.

This WO 2006/136847A2 discloses a license plate according to the preamble of claim 1.

### DESCRIPTION OF THE INVENTION

The reinforced license plate proposed by the invention is therefore configured as a remarkable novelty within its field of application, since the objectives described above are specifically and satisfactorily achieved based on its implementation, the characterizing details thereof which make it possible and distinguish it from that already known on the market being conveniently listed in the final claims accompanying the present description.

Specifically, as indicated above the invention proposes a license plate for vehicles which is distinguished by having with a high standard finish providing esthetics and strength at the same time, for which it combines the appeal methacrylate plates have on their outer face, i.e., their exposed face, with a metallic reinforcement base on their metallic rear face.

More specifically, the plate of the invention is essentially configured from a metallic lower base, an intermediate sheet in which there are incorporated common characters and logotypes of the plate, as well as the particulars corresponding to each specific unit, and an upper plate made of a transparent material which protects and improves the appearance of the intermediate sheet.

Based on this essential configuration, it must be highlighted that the metallic lower base, which could be made of any metallic material, is preferably made of aluminum sheet, thereby preventing undesired corrosion effects.

In any case, this base furthermore has the particularity of having a peripheral reinforcement which is established by the existence of a peripheral rim projecting outwardly from the rest of the layers of the plate, i.e., the intermediate sheet and the transparent upper plate, providing a significant increase in the strength thereof both against bending and against blows or impacts on the edge of the plate that may affect the transparent upper plate.

The intermediate sheet is in turn preferably manufactured from reflective material or is made of any other material suitable for incorporating a printed reflective layer, as well as the appropriate logotypes or characters according to the regulations in each place. In any case, it is a sheet suitable for incorporating the alphanumeric characters printed thereon, identifying the vehicle for which the license plate is intended, such printing preferably being carried out by means of a digital printer at the moment of producing the plate after being suitably requested.

Furthermore, it must be mentioned that this intermediate sheet has on its lower face, the one which will be in contact with the metallic lower base, a layer of glue for providing suitable attachment with same, this layer of glue being protected with a silicone paper film which is removed at the moment of producing the plate, preferably by means of a laminating process.

Finally, the transparent upper plate, which can be manufactured from any material suitable for outdoor use, is preferably a plastic material, more particularly a thermoplastic, and more specifically methacrylate, with the advantage that it may have a variable thickness since the metallic base and particularly the peripheral rim thereof provide the assembly with sufficient strength to prevent having to have a specific thickness. Therefore, this transparent upper plate preferably has a thickness of between 1 and 3 millimeters.

Like the intermediate sheet, the transparent upper plate is also provided on its lower face, the one which will be in contact with said intermediate sheet, with a layer of glue which in turn is also protected with a silicone paper film which is removed at the moment of producing the plate.

The following steps are followed for producing the plate mentioned above:
- First, the appropriate alphanumeric characters are printed on the intermediate sheet by means of using a digital printer.
- Then, the silicone paper is removed from the transparent upper plate and said plate is laminated with the intermediate sheet, preferably by means of a portable laminating press, the assembly obtained being subsequently incorporated to the metallic base also after removing the silicone paper from the intermediate sheet, preferably also by means of laminating with the mentioned type of laminating machine.
- In another assembly option, the three layers of the plate, i.e., the transparent upper plate, the intermediate sheet and the metallic base, are directly laminated with one another after having first removed the silicone paper films.

The described reinforced license plate therefore represents an innovation of structural and constitutive features that were unknown up until now, these reasons, combined with its practical usefulness, giving the invention sufficient grounds for obtaining the exclusive right that is sought.

### DESCRIPTION OF THE DRAWINGS

To complement the description that is being made and for the purpose of aiding to better understand the features of the invention, a set of drawings is attached to the present specification as an integral part thereof in which the following has been depicted with an illustrative and non-limiting character:

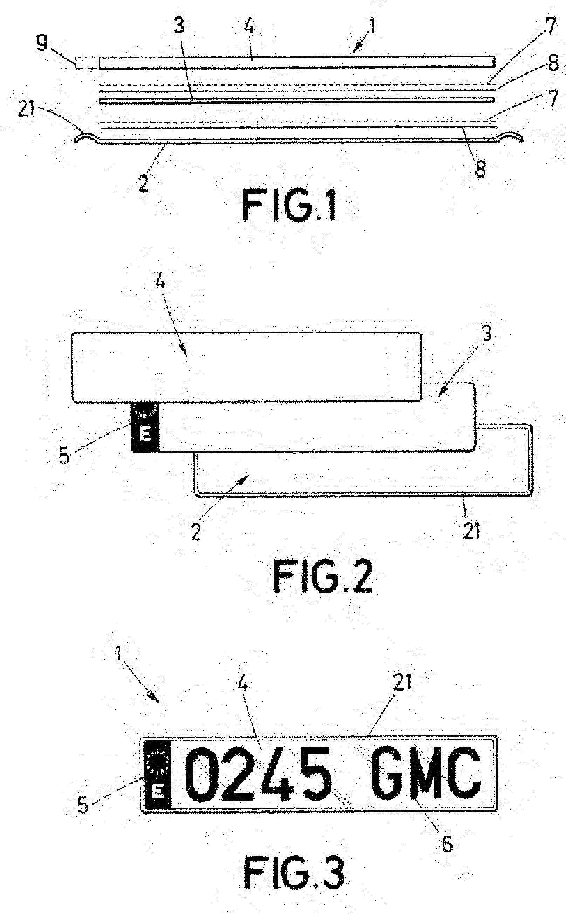

Figure 1 shows a schematic section view of the main parts and elements comprised in the reinforced license plate object of the invention, according to a preferred example thereof, the arrangement of said layers and elements also being seen.
Figure 2 shows a top plan view of the essential parts of material comprised in the plate, depicted before going through the processes of printing particular characters and laminating to form the plate.
Figure 3 shows a top plan view of an example of the plate of the invention already completed, i.e., once printed and laminated.

### PREFERRED EMBODIMENT OF THE INVENTION

In view of the mentioned drawings and according to the numbering used, a non-limiting example of the proposed reinforced license plate which comprises the parts and elements that are indicated and described in detail below can be seen therein.

In this manner, as seen in said drawings the plate (1) at hand essentially comprises a metallic lower base (2), an intermediate sheet (3) in which there are incorporated the common characters and logotypes of the plate, as well as the particulars corresponding to each specific unit, and a transparent upper plate (4) which protects and improves the appearance of the intermediate sheet.

The lower base (2) is made of any metallic material although it is preferably made of aluminum sheet, making it lightweight and preventing undesired corrosion effects.

In any case, the lower base (2) has a peripheral reinforcement established by the existence of a rim (21) running along the entire peripheral extension thereof forming a protuberance rising slightly above the rest of this base and projecting outwardly and closely with respect to the rest of the layers of the plate (1), i.e., with respect to the printed intermediate sheet (3) and the transparent upper plate (4), for which it is sized with respect to the dimensions of said intermediate sheet (3) and upper plate (4), which are identical in terms of shape and dimension.

The intermediate sheet (3) is in turn manufactured either from reflective material or from any other material suitable for incorporating a printed reflective layer, the first option being preferred. In any case, this sheet is of a material suitable for incorporating logotypes (5) and alphanumeric characters (6) that are printed thereon for the specific identification of the plate (1), preferably, by means of digital printing.

Furthermore, the intermediate sheet (3) has on its lower face a layer of glue (7) for providing suitable attachment with the metallic base (2), this layer of glue (7) being protected with a silicone paper film (8) which is removed before the moment of producing the plate by means of laminating.

Finally, the transparent upper plate (4) is manufactured from any material suitable for outdoor use, but it is preferably made of methacrylate, the thickness (g) thereof being variable, preferably between 1 and 3 millimeters.

Like the intermediate sheet (3), the transparent upper plate (4) is also provided on the lower face thereof with a layer of glue (7) which is in turn protected with a silicone paper film (8) which is removed at the moment before producing the plate.

Having sufficiently described the nature of the present invention as well as the way of putting it into practice, it is not considered necessary to further describe the invention so that a person skilled in the art can comprehend the scope thereof and the advantages derived from it.

Likewise, it must be stated that the present invention could be carried out to practice within its essential features in other embodiments differing in detail from that indicated by way of example and such embodiments would also be covered by the protection that is sought provided that the fundamental principle thereof is neither altered, changed nor modified.

## Claims

1. A reinforced license plate, comprising at least one sheet (3) with logotypes (5) and alphanumeric characters (6) printed thereon and a transparent plate (4) which protects and improves the appearance (21), is **characterized by** comprising a metallic lower base (2) having a peripheral reinforcement, an intermediate sheet manufactured from reflective material (3) incorporating logotypes (5) and alphanumeric characters (6) that are printed thereon, and a transparent upper plate (4) which protects and improves the appearance of the intermediate sheet, all of them being attached to one another by means of laminating.

2. The reinforced license plate according to claim 1, **characterized in that** the lower base (2) is made of aluminum sheet.

3. The reinforced license plate according to claim 1 or 2, **characterized in that** the peripheral reinforcement of the lower base (2) is established by a rim (21) running along the entire peripheral extension thereof forming a protuberance rising slightly above the rest of this base and projects outwardly and closely with respect to the printed intermediate sheet (3) and the transparent upper plate (4) which are identical in terms of shape and dimension.

4. The reinforced license plate according to any of claims 1 to 3, **characterized in that** the intermediate sheet (3) incorporates logotypes (5) and alphanumeric characters (6) that are printed thereon by means of digital printing.

5. The reinforced license plate according to any of claims 1 to 4, **characterized in that** the intermediate sheet (3) incorporates a printed reflective layer.

6. The reinforced license plate according to any of claims 1 to 5, **characterized in that** the intermediate sheet (3) has on its lower face a layer of glue (7) providing the attachment thereof with the metallic base (2), this layer of glue (7) being protected with a silicone paper film (8) which is removed before the moment of producing the plate by means of laminating.

7. The reinforced license plate according to any of claims 1 to 6, **characterized in that** the transparent upper plate (4) is made of methacrylate.

8. The reinforced license plate according to any of claims 1 to 7, **characterized in that** the transparent upper plate (4) has a thickness of between 1 and 3 millimeters.

9. The reinforced license plate according to any of claims 1 to 8, **characterized in that** the transparent upper plate (4) is provided on the lower face thereof with a layer of glue (7) providing the attachment thereof with the intermediate sheet (3) and is protected with a silicone paper film (8) which is removed at the moment before producing the plate by means of laminating.

## Patentansprüche

1. Verstärktes Nummernschild, welches, mindestens eine Folie (3) mit gedruckten Logos (5) und alphanumerischen Zeichen (6) und eine transparente Platte (4), welche sie schützt und verschönert (21) umfassend, **dadurch gekennzeichnet ist, dass** es, durch Auswalzen verbunden, eine metallische untere Basis (2), welche eine Umfangsverstärkung aufweist, eine Zwischenfolie, welche aus einem reflexiven Material (3) gefertigt ist und die Logos (5) und die alphanumerischen Zeichen (6) gedruckt eingliedert, und eine obere transparente Platte (4), welche die Zwischenfolie schützt und verschönert, umfasst.

2. Verstärktes Nummernschild nach Anspruch 1, **dadurch gekennzeichnet, dass** die untere Basis (2) aus Aluminiumblech ist.

3. Verstärktes Nummernschild nach Anspruch 1 oder 2, **dadurch gekennzeichnet, dass** die Umfangsverstärkung der unteren Basis (2) von einer Umrandung (21) bestimmt ist, welche deren gesamte Umfangserstreckung durchläuft, unter Bildung eines Vorsprungs, welcher sich leicht über dem Rest dieser Basis hebt und welcher sich außen und knapp über der gedruckten Zwischenfolie (3) und der oberen transparente Platte (4), welche hinsichtlich der Form und der Abmessung gleich sind, hebt.

4. Verstärktes Nummernschild nach einem der Ansprüche 1 bis 3, **dadurch gekennzeichnet, dass** die Zwischenfolie (3) die gedruckten Logos (5) und alphanumerischen Zeichen (6) mittels Digitaldruck eingliedert.

5. Verstärktes Nummernschild nach einem der Ansprüche 1 bis 4, **dadurch gekennzeichnet, dass** die Zwischenfolie (3) eine gedruckte reflexive Schicht eingliedert.

6. Verstärktes Nummernschild nach einem der Ansprüche 1 bis 5, **dadurch gekennzeichnet, dass** die Zwischenfolie (3) in deren unteren Fläche mit einer Leimschicht (7) versehen ist, welche die Verbindung derselben mit der metallischen Basis (2) bereitstellt, wobei diese Leimschicht (7) mit einem Film aus silikoniertem Papier (8) geschützt ist, welcher vor dem Zeitpunkt der Anfertigung des Schildes mittels des Auswalzens entfernt wird.

7. Verstärktes Nummernschild nach einem der Ansprüche 1 bis 6, **dadurch gekennzeichnet, dass** die obere transparente Platte (4) aus Methacrylat ist.

8. Verstärktes Nummernschild nach einem der Ansprüche 1 bis 7, **dadurch gekennzeichnet, dass** die obere transparente Platte (4) eine Dicke zwischen 3 und 1 Millimetern aufweist.

9. Verstärktes Nummernschild nach einem der Ansprüche 1 bis 8, **dadurch gekennzeichnet, dass** die obere transparente Platte (4) in deren unteren Fläche mit einer Leimschicht (7) versehen ist, welche die Verbindung derselben mit der Zwischenfolie (3) bereitstellt und welche mit einem Film aus silikoniertem Papier (8) geschützt ist, welcher im Zeitpunkt vor der Anfertigung des Schildes mittels des Auswalzens entfernt wird.

## Revendications

1. PLAQUE D'IMMATRICULATION RENFORCÉE comprenant au moins une lame (3) avec des logotypes (5) et des caractères alphanumériques (6) imprimés et une planche transparente (4) qui la protège et embellit (21), **caractérisée en ce qu'**elle comprend, unies par le biais de laminage, une base inférieure (2) métallique qui présente un renfort périmétrique, une lame intermédiaire fabriquée en matière réfléchissante (3) qui incorpore des imprimés, les logotypes (5) et les caractères alphanumériques (6), et une planche supérieure (4) transparente qui protège et embellit la lame intermédiaire.

2. PLAQUE D'IMMATRICULATION RENFORCÉE, selon la revendication 1, **caractérisée en ce que** la base inférieure (2) est en tôle d'aluminium.

3. PLAQUE D'IMMATRICULATION RENFORCÉE, selon la revendication 1 ou 2, **caractérisée en ce que** le renfort périmétrique de la base inférieure (2) est déterminé par un rebord (21) qui parcourt toute son étendue périmétrique en formant une protubérance qui s'élève légèrement au-dessus du reste de cette base et qui dépasse extérieurement et de manière ajustée par rapport à la lame intermédiaire (3) imprimée et par rapport à la planche supérieure (4) transparente qui sont identiques à la forme et à la dimension.

4. PLAQUE D'IMMATRICULATION RENFORCÉE, selon l'une quelconque des revendications 1 à 3, **caractérisée en ce que** la lame intermédiaire (3) incorpore les logotypes (5) et les caractères alphanumériques (6) imprimés par le biais d'impression numérique.

5. PLAQUE D'IMMATRICULATION RENFORCÉE, selon l'une quelconque des revendications 1 à 4, **caractérisée en ce que** la lame intermédiaire (3) incorpore une couche réfléchissante imprimée.

6. PLAQUE D'IMMATRICULATION RENFORCÉE, selon l'une quelconque des revendications 1 à 5, **caractérisée en ce que** la lame intermédiaire (3) comporte sur sa face inférieure une couche de colle (7) qui fournit l'union de celle-ci avec la base métallique (2), cette couche de colle (7) étant protégée avec une pellicule de papier siliconé (8) qui est retiré préalablement au moment de la confection de la plaque par le biais de laminage.

7. PLAQUE D'IMMATRICULATION RENFORCÉE, selon l'une quelconque des revendications 1 à 6, **caractérisée en ce que** la plancha supérieure (4) transparente est en méthacrylate.

8. PLAQUE D'IMMATRICULATION RENFORCÉE, selon l'une quelconque des revendications 1 à 7, **caractérisée en ce que** la planche supérieure (4) transparente a une épaisseur allant de 3 a 1 millimètres.

9. PLAQUE D'IMMATRICULATION RENFORCÉE, selon l'une quelconque des revendications 1 à 8, **caractérisée en ce que** la planche supérieure (4) transparente est pourvue, sur sa face inférieure, d'une couche de colle (7) qui fournit l'union de celle-ci avec la lame intermédiaire (3) et qui est protégée avec une pellicule de papier siliconé (8) qui est retiré au moment préalable à la confection de la plaque par le biais de laminage.
